# EUROPEAN PATENT APPLICATION

(11) **EP 2 540 523 A1**
(43) Date of publication of application: **02.01.2013**
(21) Application number: 12174014.6
(22) Date of filing: 28.06.2012
(51) Int. Cl.: B60B 33/06

(54) **Wheel projection mechanism and storage bed base provided with same**

(30) Priority: 29.06.2011 ES 201131096
(71) Applicant: Herrera Seco, Fidelio, 28016 Madrid (ES)
(72) Inventor: Herrera Seco, Fidelio, 28016 Madrid (ES)
(74) Representative: ABG Patentes, S.L.

(57) **Abstract**

The present invention relates to a wheel projection mechanism which comprises a first part (1) comprising a support surface (1.1) and a coupling surface (1.2), a second part (2) coupled with the coupling surface (1.2) of the first part (1), such that the second part (2) can rotate around itself about a first axis of revolution (7) perpendicular to the coupling surface (1.2), the second part (2) defining a second axis of revolution (8) which is coplanar and forms an angle of between 110° and 160° with the first axis of revolution (7), and comprising means for articulating a castor wheel according to the second axis of revolution (8).

## Description

### Object of the Invention

The present invention relates to a wheel projection mechanism and to a storage bed base provided with same.

### Background of the Invention

Small pivoting castor wheels located more or less close to the legs are normally installed under the box to move storage bed bases for small distances. Said wheels can be pulled out manually downwards, such that when they are retracted, the box rests on the floor on the legs and when the wheels are pulled out, the box rests on the wheels. The mechanism for pulling the wheels out is generally located inside the box of the storage bed base, such that it is necessary to open the storage bed base before being able to move it.

### Description of the Invention

The present invention provides a wheel projection mechanism according to claim 1 with maximum simplicity and minimal cost which allows to be manually operated from the outside of the storage bed base or furniture to which it is coupled in a condition of use. The present invention additionally provides a storage bed base according to claim 15. The dependent claims define the preferred embodiments of the invention.

A first aspect defines a wheel projection mechanism comprising a first part with a support surface and a coupling surface and a second part, coupled with the coupling surface of the first part, such that the second part can rotate around itself about a first axis of revolution perpendicular to the coupling surface, the second part defining a second axis of revolution which is coplanar and forms an angle of between 110° and 160° with the first axis of revolution, and the second part comprising means for articulating a castor wheel according to the second axis of revolution.

In one embodiment, the wheel projection mechanism comprises operating means to facilitate the rotation of the second part with respect to the first part about the first axis of revolution. In one embodiment, the operating means comprise a rod coupled in the second part perpendicular to the rotation axis of the rod for a manual operation by way of a lever.

In one embodiment, the wheel projection mechanism comprises at least one stop for limiting the path of the operating means.

In one embodiment, the angle between the second axis of revolution and the first axis of revolution of the second part is of substantially 135°.

In one embodiment, the support surface of the first part forms an angle of between 110 and 160° with the coupling surface, preferably an angle of substantially 135°.

In one embodiment, the first part is configured as a folded rectangular sheet metal. In an alternative embodiment, the first part is machined from a metal profile.

In one embodiment of the wheel projection mechanism, one of the coupling surfaces of the first part and the second part has an opening for housing a corresponding rotation portion arranged on the other coupling surface of the first part and the second part for coupling the first and the second part. In a preferred embodiment, the second part has a rotation appendage and the first part has a borehole for housing the rotation appendage of the second part, such that the relative rotation between both parts according to the first axis of revolution is allowed.

In one embodiment of the wheel projection mechanism, the first part has at least one opening on the support surface. This opening advantageously allows fixing the wheel projection mechanism to a piece of furniture or article.

In a second inventive aspect, the invention relates to a storage bed base provided with at least one wheel projection mechanism according to the first inventive aspect.

Despite of the fact that the invention has been defined in relation with its application to a storage bed base, it will be understood that the wheel projection mechanism is also applicable to other types of furniture the volume and/or weight of which makes moving them by means of projectable wheels desirable.

All the features described herein (including the claims, description and drawings) can be combined in any combination, with the exception of the combinations of such mutually excluding features.

### Description of the Drawings

To complement the description that will be made below and for the purpose of aiding to better understand the features of the invention according to a preferred practical embodiment thereof, a set of drawings is attached as an integral part of this description in which the following has been depicted with an illustrative and non-limiting character:
Figure 1 shows a wheel projection mechanism according to an embodiment of the invention in a situation with the wheel projected.
Figure 2 shows the exploded view of the wheel projection mechanism of Figure 1.
Figure 3 shows an enlarged view of the first and the second part of the wheel projection mechanism.
Figure 4 shows the wheel projection mechanism of Figure 1 in a situation with the wheel retracted.
Figures 5 and 6 show two views of a second embodiment of the first part of the wheel projection mechanism.

### Preferred Embodiment of the Invention

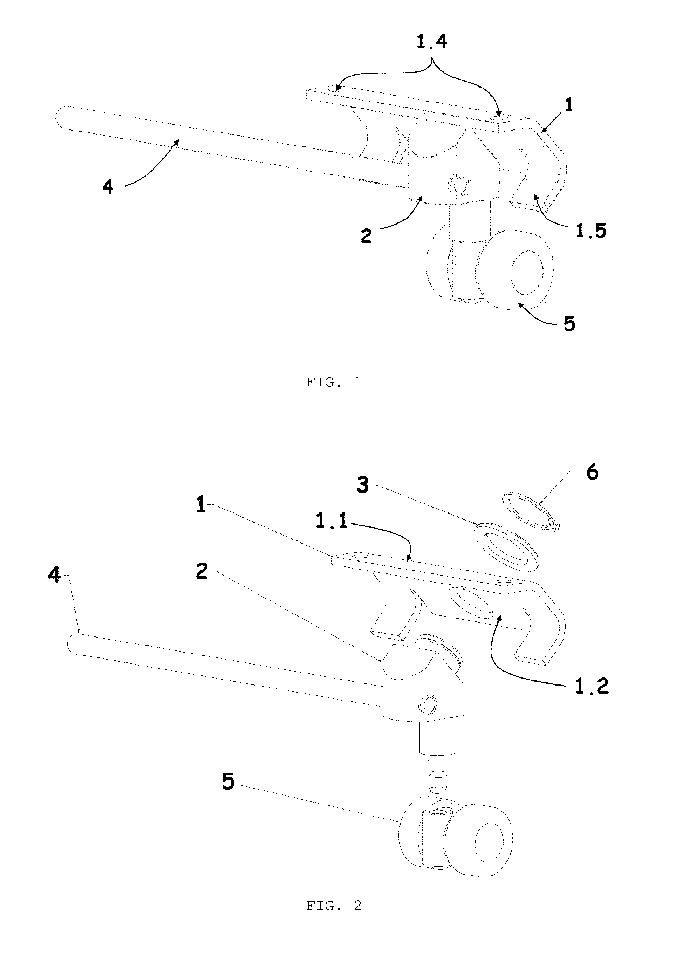

Figures 1-4 show an embodiment of the wheel projection mechanism, in which it shows a first part (1) comprising a support surface (1.1) intended to be fixed to a storage bed base or a piece of furniture to which movement by means of wheels is to be provided and a coupling surface (1.2) for coupling with the second part (2). In this embodiment, the support surface (1.1) is provided to be in a substantially horizontal position in a condition of use to act as support to the storage bed base.

In this non-exclusive preferred embodiment, the first part (1) is configured as a rectangular sheet metal folded at a 135° angle with a support surface (1.1) intended to be substantially horizontal in a condition of use for receiving the weight of the piece of furniture to which it is fixed and a surface (1.2) inclined with respect to the first surface, in which a borehole (1.3) has been made, in which borehole there is housed a rotation portion of the second part (2) described below.

The second part (2) has a bent configuration comprising two rotating portions according to coplanar first (7) and second axis (8), the axis forming an angle of between 110° and 160° between them, in this case an angle of substantially 135°. The second part (2) is coupled with the first part (1) through the coupling surface (1.2) of the first part (1) such that the second part (2) can rotate around itself about the first axis of revolution (7) perpendicular to the coupling surface (1.2). In this case, the first (1) and the second part (2) are coupled by means of a rotation appendage (2.1) of the second part which is housed in a borehole (1.3) of the coupling surface (1.2) such that the relative rotation between both parts (1, 2) according to the first axis of revolution (7) is allowed.

In its simplest form, the rotation appendage (2.1) can be a cylinder with a groove for receiving an elastic safety ring (6) according to UNE 26074 or DIN 471 Standard, or other alternative retaining means, the function of which is to link the second part (2) to the first part (1) allowing the previously mentioned relative rotation. A washer (3) can be inserted to complete the fixing.

Alternatively, the rotation appendage could be provided in the first part (1) and the corresponding borehole for housing it could be provided in the second part (2).

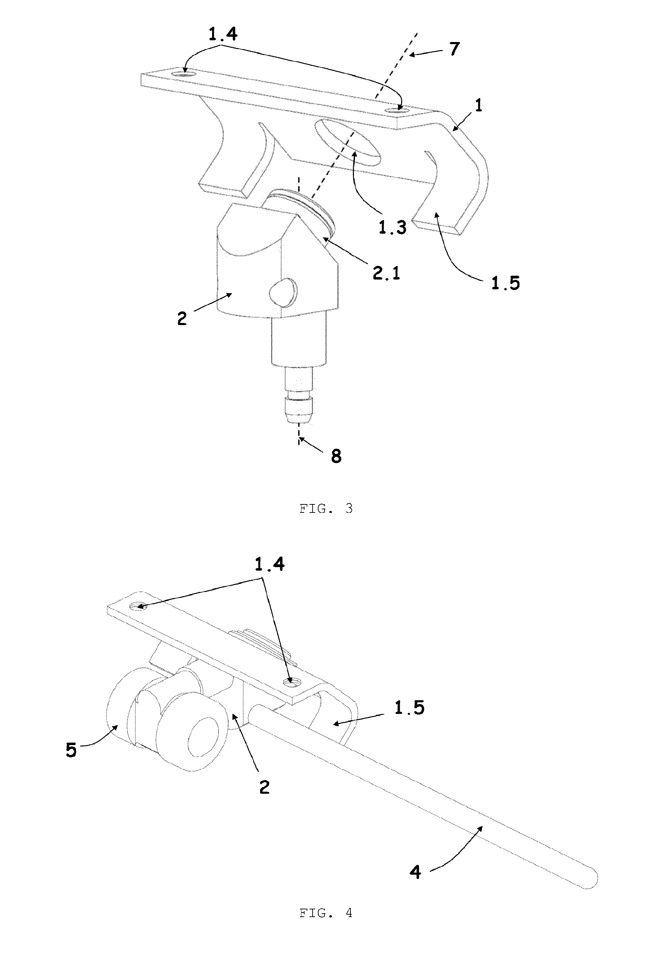

The body of a commercial castor wheel (5) (visible in the drawings) which can rotate and swivel freely has been articulated according to the second axis of revolution. Figure 3 depicts the uncoupled first part (1) and the uncoupled second part (2) as well as the axes of revolution (7, 8) to better understand the invention.

The mechanism of the embodiment is provided with operating means (4), specifically a lever or a rod arranged perpendicular to its rotation axis for operating the mechanism manually.

The mechanism can additionally be provided with stops (1.5) for limiting the circular path of the rod (4), in this case, the two small folded tabs in the first part (1) forming an angle of substantially 90° with the coupling surface (1.2).

Figure 4 shows the mechanism in a position with the wheels (5) retracted. The lever will have to rotate 180° about the first inclined axis of revolution (7) upon operating the lever (4) making it go from one end position (in Figure 4 on the right) to the opposite position (see Figure 1, with the lever located on the left). The second pivoting axis (8) of the wheel (5), will go from being horizontal (Figure 4) to vertical (Figure 1) dragging therewith the wheel (5) the center of which will go from occupying a specific level to another substantially lower level.

The mechanism of the invention facilitates moving an object which can be a storage bed base that will normally rest on the floor by means of small legs to leave a space for ventilation by preventing its lower surface from resting on the floor, such that by installing several of these wheels in the lower perimeter of the object, they can be projected downwards a small distance lifting the object high enough so that instead of resting on its legs it now rests on the wheels, these being castor wheels will enable manually moving the piece of furniture with little effort.

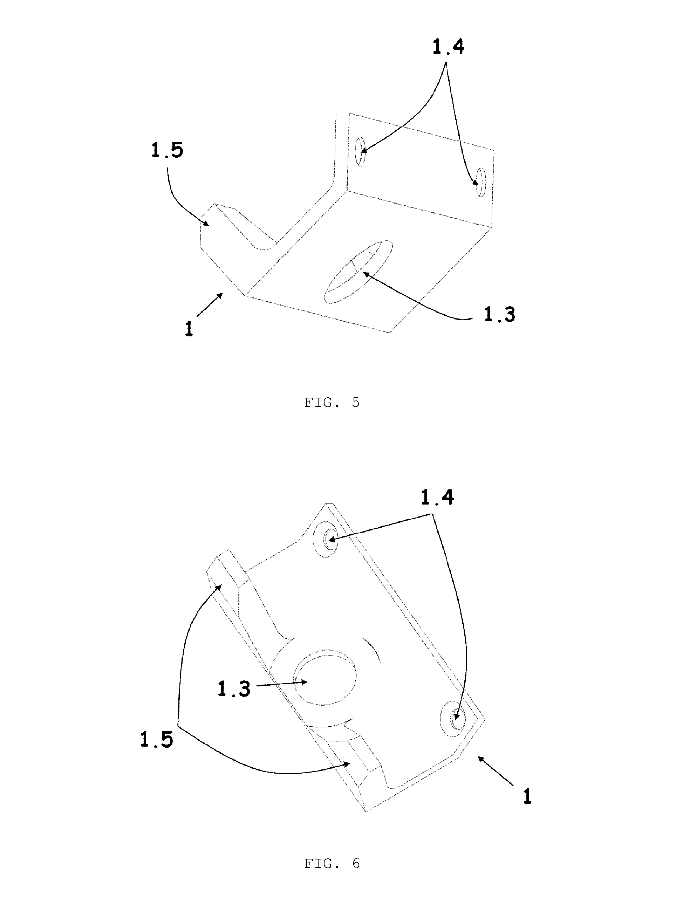

Figures 5 and 6 show a second embodiment of the first part (1) machined from a metal profile. Otherwise, this embodiment is similar to that described in relation with the preceding figures in terms of its function and its cooperation with the second part (2).

## Claims

1. A wheel projection mechanism comprising:
a first part (1) comprising a support surface (1.1) and a coupling surface (1.2), and
a second part (2), coupled with the coupling surface (1.2) of the first part (1), such that the second part (2) can rotate around itself about a first axis of revolution (7) perpendicular to the coupling surface (1.2), the second part (2) defining a second axis of revolution (8) which is coplanar and forms an angle of between 110° and 160° with the first axis of revolution (7), and comprising means for articulating a castor wheel according to the second axis of revolution (8).

2. The wheel projection mechanism according to claim 1, comprising operating means (4) to facilitate the rotation of the second part (2) with respect to the first (1) about the first axis of revolution.

3. The wheel projection mechanism according to claim 2, wherein the operating means (4) comprise a rod coupled in the second part (2) perpendicular to the rotation axis of the rod for a manual operation by way of a lever.

4. The wheel projection mechanism according to one of the preceding claims, wherein in the second part (2) the second axis of revolution (8) forms an angle of substantially 135° with the first axis of revolution (7).

5. The wheel projection mechanism according to one of the preceding claims, wherein the support surface (1.1) of the first part (1) forms an angle of between 110 and 160° with the coupling surface (1.2).

6. Wheel projection mechanism according to claim 5, wherein the support surface (1.1) of the first part (1) forms an angle of substantially 135° with the coupling surface (1.2).

7. Wheel projection mechanism according to one of the preceding claims, wherein the first part (1) is configured as a folded rectangular sheet metal.

8. The wheel projection mechanism according to one of claims 1-6, wherein the first part (1) is machined from a metal profile.

9. The wheel projection mechanism according to one of the preceding claims, wherein one of the coupling surfaces (1.2) of the first part (1) and the second part (2) has a borehole for housing a corresponding rotation portion arranged on the other coupling surface (1.2) of the first part (1) and the second part (2) for coupling the first (1) and the second (2) part.

10. The wheel projection mechanism according to claim 9, wherein the second part (2) has a rotation appendage (2.1) and the first part (1) has on its coupling surface (1.2) a borehole (1.3) for housing the rotation appendage (2.1) of the second part (2), such that the relative rotation between both parts (1, 2) according to the first axis of revolution (7) is allowed.

11. The wheel projection mechanism according to one of the preceding claims, wherein the means for articulating a castor wheel comprise a housing for receiving a rod.

12. The wheel projection mechanism according to one of the preceding claims, wherein the means for articulating the castor wheel comprise a shank configured for coupling a castor wheel.

13. The wheel projection mechanism according to any one of the preceding claims when it depends on claims 2 or 3, comprising at least one stop (1.5) for limiting the path of the operating means.

14. The wheel projection mechanism according to one of the preceding claims, wherein the first part (1) has at least one opening (1.4) on the support surface (1.1).

15. A storage bed base comprising at least one wheel projection mechanism according to any one of the preceding claims.
